# EUROPÄISCHE PATENTANMELDUNG

(11) **EP 1 498 585 A2**
(43) Veröffentlichungstag der Anmeldung: **19.01.2005**
(21) Anmeldenummer: 04013204.5
(22) Anmeldetag: 04.06.2004
(51) Int. Cl.: F01N 3/02, F01N 7/14

(54) **Baugruppe bestehend aus Wärmetauscher und Gehäuse, insbesondere für die Abgasanlagen eines Kraftfahrzeugs**

(30) Priorität: 17.07.2003 DE 20311005 U
(71) Anmelder: Arvin Technologies, Inc., Columbus, IN 47202-3000 (US)
(72) Erfinder: Thévenon, Richard, 89250 Beaumont (FR)
(74) Vertreter: Sties, Jochen, Dipl.-Ing.

(57) **Zusammenfassung**

Die Erfindung betrifft eine Baugruppe bestehend aus einem Gehäuse (10) und einem Wärmetauscher (22), insbesondere für eine Abgasanlage eines Kraftfahrzeugs, wobei ein Labyrinth-Dichtring (30) vorgesehen ist, der zwischen dem Wärmetauscher und dem Gehäuse abdichtet.

## Beschreibung

Die Erfindung betrifft eine Baugruppe bestehend aus einem Gehäuse und einem Wärmetauscher, insbesondere für eine Abgasanlage eines Kraftfahrzeugs.

Durch den Wärmetauscher kann der-Abgasstrom des Fahrzeugs geführt werden, um dem Abgasstrom Wärme zu entziehen, die beispielsweise zum Heizen des Innenraums des Kraftfahrzeugs zur Verfügung steht. Aufgrund der hohen Temperaturunterschiede zwischen einerseits dem Abgas, das durch den Wärmetauscher strömt, und andererseits der Umgebungsluft der Abgasanlage erfahren die verschieden Bauteile erhebliche Wärmeausdehnungen, die konstruktiv berücksichtigt werden müssen. Ein besonders Problem bereitet die Abdichtung zwischen dem Gehäuse des Wärmetauschers und dem Wärmetauscher selbst. Der Wärmetauscher kann üblicherweise nicht sowohl auf seiner Einlaß- als auch auf seiner Auslaßseite fest mit dem ihn umgebenden Gehäuse verbunden werden, beispielsweise verschweißt werden, da es aufgrund der unterschiedlichen Wärmeausdehnungen des Gehäuses und des Wärmetauschers sonst zu übermäßig hohen Wärmespannungen kommen würde. Aus diesem Grund ist der Wärmetauscher üblicherweise an einer seiner beiden Seiten fest am Gehäuse angebracht und auf der anderen Seite schwimmend gelagert. Daraus folgt jedoch das Problem, daß trotz der schwimmenden Lagerung und der unvermeidlichen Relativbewegung zwischen dem Gehäuse und dem Wärmetauscher dort eine zuverlässige Abdichtung erfolgen muß. Es ist nämlich kaum möglich, das Gehäuse gasdicht auszuführen, da der Wärmetauscher notwendigerweise mit Anschlüssen versehen ist, die durch das Gehäuse hindurch nach außen geführt werden müssen. Im Hinblick auf die auftretenden Relativbewegungen zwischen dem Wärmetauscher und dem Gehäuse ist eine Abdichtung im Bereich der Anschlüsse kaum möglich. Dies bedeutet, daß potentiell die Gefahr besteht, daß ein Teil des Abgases in einen Bereich zwischen dem Gehäuse und dem Wärmetauscher eindringt und von dort über die Durchführung im Gehäuse für die Anschlüsse nach außen entweicht. Dies ist insbesondere dann unerwünscht, wenn der Abgasstrom erst stromabwärts des Wärmetauschers durch heute üblicherweise vorgesehene Reinigungsvorrichtungen geführt wird, beispielsweise durch Katalysatoren. Das eventuell entweichende Abgas wäre dann nämlich ungereinigt.

Daher besteht die Aufgabe der Erfindung darin, bei einer Baugruppe der eingangs genannten Art eine besonders wirksame Abdichtung zwischen dem Wärmetauscher und dem Gehäuse vorzusehen.

Zu diesem Zweck ist erfindungsgemäß bei einer Baugruppe der eingangs genannten Art ein Labyrinth-Dichtring vorgesehen, der zwischen dem Wärmetauscher und dem Gehäuse abdichtet. Der Labyrinth-Dichtring sorgt für eine effektive Abdichtung, während sich gleichzeitig der Wärmetauscher relativ zu ihm verschieben kann.

Der Labyrinth-Dichtring weist vorzugsweise einen Flansch auf, der mit einer Haltefläche des Gehäuses gasdicht verschweißt werden kann, wobei das dem Flansch entgegengesetzte axiale Ende des Labyrinth-Dichtringes flächig auf der Außenfläche des Wärmetauschers elastisch federnd anliegt. Der Labyrinth-Dichtring folgt somit problemlos den Wärmeausdehnungen des Wärmetauschers.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 einen Längsschnitt durch eine erfindungsgemäße Baugruppe;
- Figur 2 in vergrößertem Maßstab den Ausschnitt II von Fig. 1; und
- Figur 3 in einer perspektivischen, vergrößerten Ansicht den bei der erfindungsgemäßen Baugruppe verwendeten Labyrinth-Dichtring.

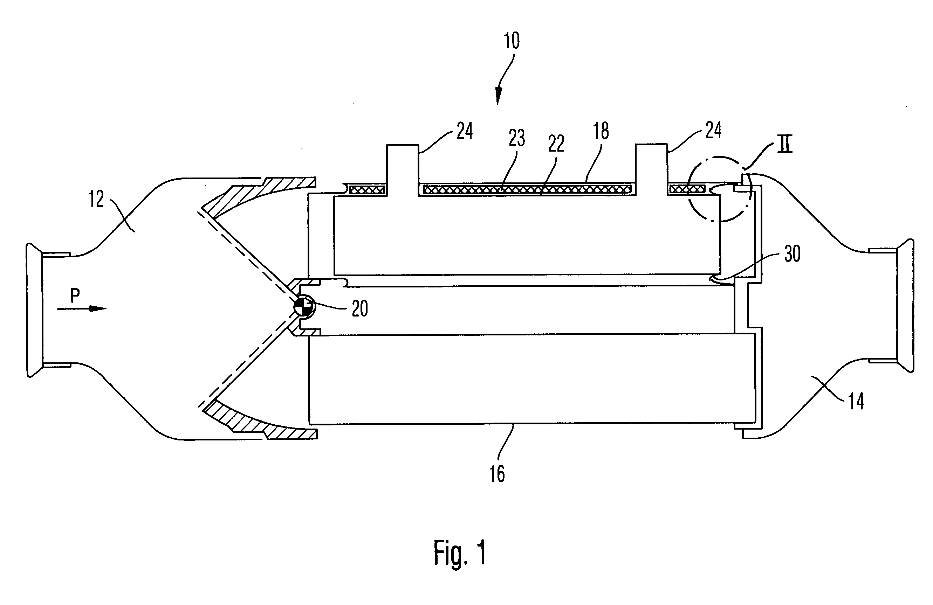

In Fig. 1 ist ein Gehäuse 10 gezeigt, das hier aus einem Einlaßtrichter 12, einem Auslaßtrichter 14, einem Bypass-Kanal 16 und einem Wärmetauscher-Mantel 18 besteht. Das Gehäuse ist dafür vorgesehen, in einer Abgasanlage eines Kraftfahrzeugs angeordnet zu werden, so daß es in der Richtung des Pfeils P von Fig. 1 von Abgas durchströmt wird. Im Inneren des Einlaßtrichters 12 ist ein Klappenventil angeordnet von dem hier nur die Ventilspindel 20 gezeigt ist. Mit dem Klappenventil kann gesteuert werden, welcher Anteil des gesamten Abgasstromes durch den Bypass-Kanal oder durch den im Inneren des Wärmetauscher-Mantels 18 gebildeten Wärmetauscher-Kanal strömt.

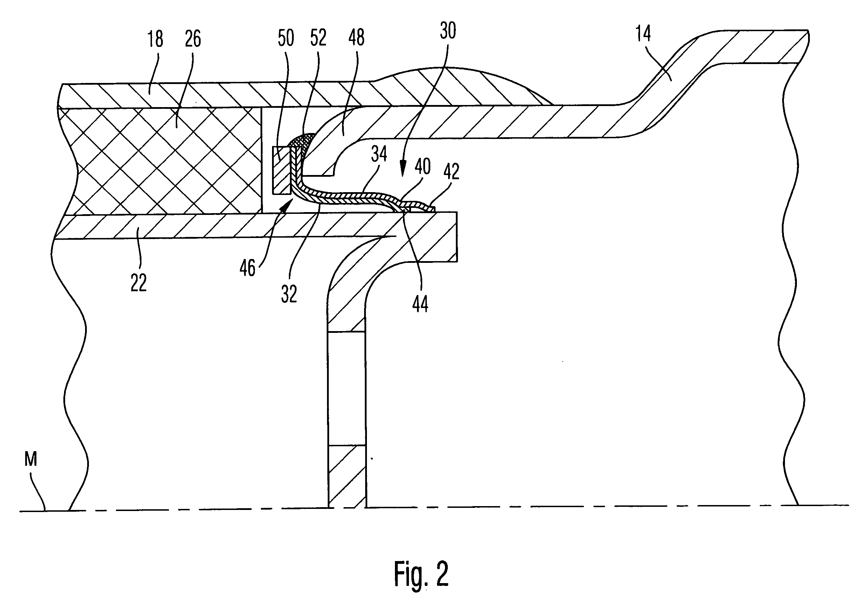

Innerhalb des Wärmetauscher-Mantels 18 ist ein Wärmetauscher 22 angeordnet, der einerseits vom Abgas durchströmt wird und andererseits über Anschlüsse 24 an einen Wärmetauscher-Kreislauf angeschlossen werden kann. Der Wärmetauscher ist an seinem bezüglich Fig.1 linken Ende, also dem stromaufwärtigen Ende, fest mit dem Gehäuse 10 verschweißt. Der Wärmetauscher 22 hat eine zylindrische Form mit einer Mittelachse M, und auch der Wärmetauscher-Mantel 18 ist zylindrisch geformt. Zwischen dem Wärmetauscher 22 und der Wärmetauscher-Mantel 18 ist eine Isolationsschicht 26 angeordnet. An seinem stromabwärtigen Ende ist der Wärmetauscher 22 schwimmend im Gehäuse 10 gelagert, insbesondere im Auslaßtrichter 14 und im Wärmetauscher-Mantel 18 (siehe Fig. 2).

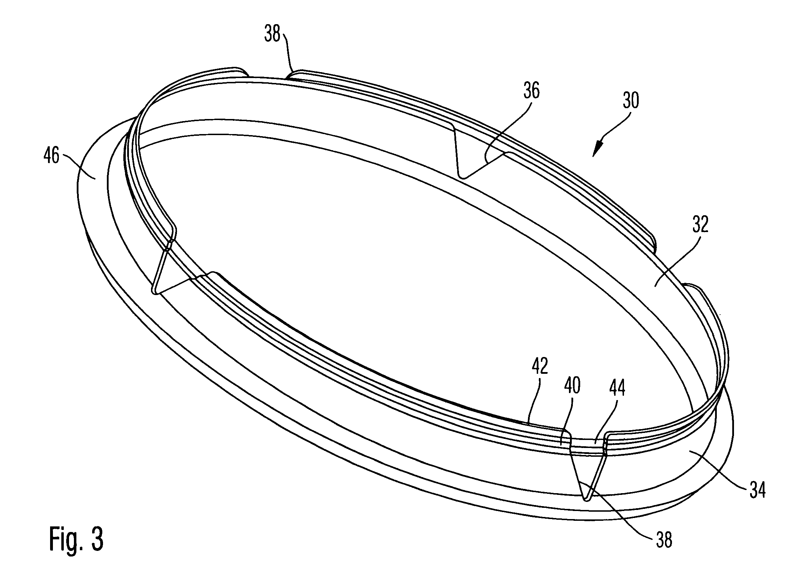

Zur Abdichtung zwischen dem Wärmetauscher 22 und dem Gehäuse 10 ist ein Labyrinth-Dichtring 30 (siehe auch Fig. 3) vorgesehen. Der Labyrinth-Dichtring 30 besteht aus einem Innenring 32 und einem Außenring 34, die dicht aneinander anliegen. Beide Ringe 32, 34 sind mit V-förmigen Schlitzen 36, 38 versehen, die gleichmäßig in Abständen von 90° angeordnet sind. Die beiden Ringe 32, 34 sind dabei so gegeneinander verdreht, daß die Schlitze des einen Ringes über ungeschlitzten Abschnitten des anderen Ringes liegen. Anders ausgedrückt beträgt der Winkelabstand von einem Schlitz zum nächsten am Labyrinth-Dichtring etwa 45°. Als Material für den Innenring 32 und den Außenring 34 wird eine wärmefeste Metallegierung mit guten Federeigenschaften verwendet.

Der Außenring 34 ist mit zwei Stufen 40, 42 ausgeführt, wobei die Stufe 40 einen geringfügig kleineren Durchmesser hat als der eigentliche Körper des Außenringes 34 und die zweite Stufe 42 einen wiederum geringfügig kleineren Durchmesser hat als die erste Stufe 40. Der Innenring 32 ist mit einer einzigen Stufe 44 ausgebildet, die unterhalb der ersten Stufe 40 des Außenringes 34 liegt, wobei der Außendurchmesser der einzigen Stufe 44 des Innenrings 32 dem Innendurchmesser der ersten Stufe 40 des Außenringes 34 entspricht. Gleichzeitig entspricht der Innendurchmesser der einzigen Stufe 44 des Innenrings 32 dem Innendurchmesser der zweiten Stufe 42 des Außenrings 34.

Der Labyrinth-Dichtring 30 ist mit einem Flansch 46 versehen, der gebildet ist durch einen abgebogenen Flanschabschnitt am Innenring 32 und am Außenring 34. Der Innenring 32 und der Außenring 34 liegen durchgängig eng flächig aneinander an. Durch die gebildeten Stufen am Innen- und am Außenring 32, 34 sind die beiden Ringe rastend miteinander zu einer Einheit verbunden. Auf der von den Stufen abgewandten Seite ist am Flansch 46 ein Schweiß-Hilfsring 50 angeordnet, der lediglich dazu dient, die Schweißbarkeit des Labyrinth-Dichtringes 30 zu verbessern; der Flansch 46 hat eine sehr geringe Wandstärke.

Der Labyrinth-Dichtring 30 ist auf das stromabwärtige Ende des Wärmetauschers 22 so aufgeschoben, daß der Flansch 46 zum stromaufwärtigen Ende gerichtet ist. Dabei liegt der Innenring 32 mittels seiner einzigen Stufe 44 und der Außenring 34 mittels seiner zweiten Stufe 42 auf der Außenfläche des Wärmetauschers 22 dicht an. Der Innendurchmesser des Labyrinth-Dichtringes 32 im Bereich der einzigen Stufe 44 des Innenrings und der zweiten Stufe 42 des Außenring ist so gewählt, daß der Labyrinth-Dichtring beim Aufschieben auf die Außenfläche des Wärmetauscher 22 geringfügig elastisch aufgeweitet wird. Auf diese Weise wird eine Vorspannung des Labyrinth-Dichtringes erzielt, die für eine gute Dichtwirkung wichtig ist.

Zur Verbesserung der Dichtwirkung kann vorgesehen sein, daß die Außenfläche des Wärmetauschers 22 in dem Bereich, auf dem der Labyrinth-Dichtring 30 sitzt, durch Pressen, Prägen, Rollen oder ähnlich Bearbeitungsschritte nachbearbeitet wurde, damit besonders enge Form- und Abmessungtoleranzen eingehalten werden, insbesondere hohe Anforderungen an die Rundheit der Außenfläche des Wärmetauschers.

Der Labyrinth-Dichtring 30 ist mit seinem Flansch 46 an einer ihm zugeordneten Fläche des Gehäuses, hier einer Haltefläche 48 des Abgaskrümmers 14, fest verbunden, und zwar mittels einer gasdichten Schweißnaht. 52. Die Schweißnaht 52 verbindet dabei den Schweiß-Hilfsring 50, den Flanschabschnitt des Innenrings 32, den Flanschabschnitt des Außenrings 34 und die Haltefläche 49 gasdicht miteinander, so daß eine maximale Stabilität bei absoluter Gasdichtigkeit erreicht wird.

Wenn es beim Betrieb der Baugruppe zu Wärmeausdehnungen des Wärmetauschers 22 relativ zum Gehäuse 10 kommt, kann sich das stromabwärtige Ende des Wärmetauschers 22 relativ zum Labyrinth-Dichtring 30 verschieben. Dabei gleiten die Stufen 42, 44 des Außenrings 34 bzw. des Innenrings 32 auf der Außenfläche des Wärmetauschers 22. Die Elastizität des Labyrinth-Dichtringes, die insbesondere aufgrund der V-förmigen Schlitze 36, 38 gegeben ist, ermöglicht es dem Labyrinth-Dichtring 30, auch Wärmedehnungen des Wärmetauschers 22 in radialer Richtung mitzumachen. Unabhängig von eventuellen elastischen Verformungen liegen der Innenring 32 und der Außenring 34 des Labyrinth-Dichtringes 30 immer dicht aneinander an, so daß eine zuverlässige Abdichtung gegen das Eintreten von Abgas in den Bereich der Isolationsschicht 23 gewährleistet ist, nämlich zum einen durch die Schweißnaht 52 zwischen dem Labyrinth-Dichtring 30 und der Haltefläche 48 des Gehäuses 10 und zum anderen durch die Anlage der freien Enden des Innenringes 32 und des Außenringes 34 auf der Außenfläche des Wärmetauschers 22. Dabei ist es unschädlich, daß aufgrund des Schlitzes 38 etwas Abgas in den Bereich zwischen der zweiten Stufe 42 des Außenringes 34 und der Stufe 44 des Innenringes 32 und von dort auch in den Schlitz 36 im Innenring 32 eintreten kann. Da die Schlitze 36 im Innenring 32 vollständig vom Körper des Außenringes 34 überdeckt werden und außerdem die beiden Ringe flächig aneinander anliegen, ist ein Durchtritt des Abgases in den Bereich zwischen dem Wärmetauscher 22 und dem Gehäuse 10 nicht möglich. Im übrigen ist auch aufgrund der Schweißnaht 52 kein Gasaustritt auf der Rückseite des Labyrinth-Dichtringes 30 möglich.

Besonders hervorzuheben ist, daß der im Inneren des Gehäuses 10 stromabwärts des Wärmetauschers 22 herrschende Druck die Dichtwirkung des Labyrinth-Dichtringes 30 verbessert. Der Innendruck ist nämlich höher als der Umgebungsdruck, der auch auf der Rückseite des Labyrinth-Dichtringes 30 herrscht, so daß der Labyrinth-Dichtring 30 nicht nur durch seine elastisch Vorspannung gegen die Außenfläche des Wärmetauschers 22 gedrückt wird, sondern auch durch die herrschende Druckdifferenz. Dies verbessert die Dichtigkeit.

Die Erfindung wurde aus Gründen einer übersichtlichen Darstellung anhand eines zylindrischen Wärmetauschers und eines zylindrischen Gehäuses erläutert. Es ist aber grundsätzlich möglich, den Wärmetauscher mit einer beliebigen Außenkontur auszuführen, beispielsweise oval oder auch rechteckig, und den Labyrinth-Dichtring mit einer daran angepaßten Form. Weiterhin kann der Labyrinth-Dichtring auch aus mehr als zwei Einzelringen bestehen, und jeder Einzelring kann mehr oder weniger als die dargestellten vier Schlitze aufweisen. Auch müssen die Schlitze nicht V-förmig ausgeführt sein.

## Patentansprüche

1. Baugruppe bestehend aus einem Gehäuse (10) und einem Wärmetauscher (22), insbesondere für eine Abgasanlage eines Kraftfahrzeugs, wobei ein Labyrinth-Dichtring (30) vorgesehen ist, der zwischen dem Wärmetauscher und dem Gehäuse abdichtet.

2. Baugruppe nach Anspruch 1, **dadurch gekennzeichnet, daß** der Labyrinth-Dichtring (30) aus mehreren Einzelringen (32, 34) besteht.

3. Baugruppe nach Anspruch 2, **dadurch gekennzeichnet, daß** die Einzelringe mit mehreren Schlitzen versehen sind, die ein elastisches Aufweiten der Einzelringe in radialer Richtung ermöglichen, und daß die Ringe relativ zueinander so angeordnet sind, daß die Schlitzen des einen Ringes über ungeschlitzten Abschnitten des anderen Ringes liegen.

4. Baugruppe nach einem der vorhergehenden Ansprüche, **dadurch gekennzeichnet, daß** mindestens einer der Ringe des Labyrinth-Dichtringes (30) eine Stufe oder mehrere Stufen aufweist.

5. Baugruppe nach einem der vorhergehenden Ansprüche, **dadurch gekennzeichnet, daß** der Labyrinth-Dichtring (30) aus einem Innenring (32) und einem Außenring (34) besteht, die beide mit mehreren Schlitzen (36, 38) versehen sind.

6. Baugruppe nach Anspruch 6, **dadurch gekennzeichnet, daß** die Schlitze (36, 38) V-förmig sind.

7. Baugruppe nach einem der vorhergehenden Ansprüche, **dadurch gekennzeichnet, daß** der Außenring (34) zweifach gestuft und der Innenring (32) einfach gestuft ist.

8. Baugruppe nach einem der vorhergehenden Ansprüche, **dadurch gekennzeichnet, daß** der Außenring (34) in axialer Richtung über den Innenring (32) hinausragt.

9. Baugruppe nach einem der vorhergehenden Ansprüche, **dadurch gekennzeichnet, daß** der Wärmetauscher (22) eine zylindrische Außenfläche aufweist, an welcher der Innenring (32) und der Außenring (34) anliegen.

10. Baugruppe nach einem der Ansprüche 1 bis 8, **dadurch gekennzeichnet, daß** der Wärmetauscher (22) eine unrunde Außenfläche aufweist und der Labyrinth-Dichtring (30) eine Innenkontur aufweist, die an den Verlauf der Außenfläche des Wärmetauschers angepaßt ist.

11. Baugruppe nach einem der vorhergehenden Ansprüche, **dadurch gekennzeichnet, daß** die Außenfläche des Wärmetauschers (32) partiell gepreßt, gerollt, geprägt oder anderweitig auf Maß gebracht ist, um besonders enge Formund Abmessungstoleranzen einhalten zu können.

12. Baugruppe nach einem der vorhergehenden Ansprüche, **dadurch gekennzeichnet, daß** der Labyrinth-Dichtring (30) mit einem abgebogenen Flansch (46) versehen ist.

13. Baugruppe nach Anspruch 12, **dadurch gekennzeichnet, daß** der Flansch (46) mit einer Haltefläche (48) des Gehäuses (10) gasdicht verbunden ist.

14. Baugruppe nach Anspruch 12 oder Anspruch 13, **dadurch gekennzeichnet, daß** der Flansch (46) auf seiner von der Haltefläche (48) abgewandten Seite mit einem Schweiß-Hilfsring (50) versehen ist.

15. Baugruppe nach einem der Ansprüche 12 bis 14, **dadurch gekennzeichnet, daß** der Flansch (46) des Labyrinth-Dichtringes (30) mittels einer Schweißnaht (52) mit dem Gehäuse verbunden ist.
